# EUROPÄISCHE PATENTSCHRIFT

(11) **EP 0 886 024 B1**
(45) Veröffentlichungstag und Bekanntmachung des Hinweises auf die Patenterteilung: **04.08.2004**
(21) Anmeldenummer: 98110298.1
(22) Anmeldetag: 05.06.1998
(51) Int. Cl.: E05B 49/00, B60R 25/04

(54) **Elektronischer Schlüssel**
Electronic key
Clé électronique

(30) Priorität: 18.06.1997 DE 19725667
(43) Veröffentlichungstag der Anmeldung: 23.12.1998
(73) Patentinhaber: Marquardt GmbH, 78604 Rietheim-Weilheim (DE)
(72) Erfinder: Mattes, Johannes, 78567 Fridingen (DE); Müller, Karl, 78628 Rottweil-Neufra (DE)
(74) Vertreter: Patentanwälte Eisele, Otten, Roth & Dobler

(56) Entgegenhaltungen:
- EP-A- 0 501 715
- WO-A-92/02702
- DE-C- 19 511 386
- US-A- 4 786 900

## Beschreibung

Die Erfindung betrifft einen elektronischen Schlüssel nach dem Oberbegriff des Patentanspruchs 1.

Elektronische Schlüssel dienen zur Betätigung eines Schließsystems. Insbesondere kann es sich dabei um ein Türschließ- und/oder Zündschloßsystem an einem Kraftfahrzeug handeln.

Ein derartiger elektronischer Schlüssel ist aus der DE-OS 195 05 190 bekannt. Der elektronische Schlüssel besitzt zum bestimmungsgemäßen Betrieb dienende Mittel, wie einen Sender und gegebenenfalls einen Empfänger. Mit Hilfe dieser Mittel ist zwischen dem elektronischen Schlüssel und dem Schließsystem wenigstens ein codiertes Betriebssignal übertragbar. Ist die anschließende Auswertung des übertragenen Betriebssignals positiv, so dass es sich um den dem Schließsystem zugehörigen elektronischen Schlüssel handelt, werden entsprechende Funktionen des Schließsystems betätigt. Bei diesen Funktionen kann es sich um die Zugangsberechtigung durch Ver- oder Entriegeln der Autotüren, einer Wegfahrsperre durch Freigabe der Motorsteuerung über das Zündschloss o. dgl. handeln.

Moderne elektronische Schlüssel verwenden für das Betriebssignal hochwertige Codes, beispielsweise einen Hashcode, die als sicher und unüberwindbar gelten. Wird jedoch der Schlüssel entwendet, so kann das Kraftfahrzeug trotzdem gestohlen werden. Vermehrt tritt auch das sogenannte "Carjacking" auf, bei dem das Kraftfahrzeug mitsamt dem zugehörigen Schlüssel gewaltsam dem Fahrer entzogen wird. Teure Diebstahlschutzsysteme verwenden daher zusätzlich ein satellitengestütztes GPS(Global Position System)-System mit einer Telefonverbindung vom Kraftfahrzeug zu einer Zentrale, um dadurch unter Umständen das gestohlene Fahrzeug nach dem Diebstahl orten zu können.

Ein weiterer elektronischer Schlüssel für ein Schließsystem ist aus der US 4 786 900 A bekannt. Der elektronische Schlüssel ist in einer Armbanduhr mit einem Tastenfeld angeordnet, wobei eine Leuchtdiode an der Armbanduhr zur Aussendung eines Codes für ein elektronisches Schloß dient. Ein Passwort ist in einem Register des elektronischen Schlüssels gespeichert. Die Aussendung des Codes für das Schloß ist nur möglich, wenn zuvor das korrekte Passwort in den Schlüssel eingegeben wird.

Des weiteren zeigt auch die DE 195 11 386 C1 ein Schließsystem für ein Kraftfahrzeug mit einem beispielsweise in einer Armbanduhr angeordneten, tragbaren Sender, der Codesignale zum Empfänger im Kraftfahrzeug senden kann. Das Auslösen der Codesignale erfolgt mittels Spracherkennung durch ein von Benutzer gesprochenes Passwort.

Sowohl beim elektronischen Schlüssel der US 4 786 900 A als auch bei demjenigen nach der DE 195 11 386 C1 ist die Eingabe des Passwortes jedesmal vor Aussendung des Codes notwendig. Nachteilig erscheint bei diesen Schlüsseln somit die aufwendig Bedienung für den Benutzer, womit es an Berrutzerkomfort mangelt. Zudem wird der Dieb beim "Carjacking" die Herausgabe des Passwortes vom Benutzer erpressen, womit diese Schlüssel wiederum keine erhöhte Diebstahlsicherheit aufweisen.

Der Erfindung liegt die Aufgabe zugrunde, den aus der US 4 786 900 A bekannten elektronischen Schlüssel derart weiterzuentwickeln, dass die Betätigung des Schließsystems auch ohne teure Zusatzsysteme bei Entwendung des zugehörigen Schlüssels verhindert werden kann.

Diese Aufgabe wird bei einem gattungsgemäßen elektronischen Schlüssel durch die kennzeichnenden Merkmale des Anspruchs 1 gelöst.

Bei der Erfindung ist der Schlüssel mit einem zusätzlichen, individuellen Code programmierbar. Der Schlüssel läßt sich durch Programmierung des individuellen Codes oder Reaktivierung eines bereits programmierten individuellen Codes in einen aktivierten Zustand versetzen, in dem die bestimmungsgemäße Verwendung des Schlüssels blockiert ist. Ein entwendeter Schlüssel ist dadurch für den Dieb nicht brauchbar. Lediglich bei Eingabe des richtigen individuellen Codes geht dann der Schlüssel wieder in den inaktivierten Zustand über, in dem der Schlüssel bestimmungsgemäß verwendbar ist. Weitere Ausgestaltungen der Erfindung sind Gegenstand der Unteransprüche.

Die Eingabe des individuellen Codes erfolgt mittels der am Gehäuse des Schlüssels befindlichen, zur Auslösung der Übertragung des codierten Betriebssignals dienenden Betätigungsorgane, beispielsweise mittels der Schließtaste zum Verriegeln der Autotüren, der Öffnungstaste zum Entriegeln der Autotüren sowie der Kofferraumtaste zum Öffnen des Kofferraumdeckels. Dabei sind bei einem aus einem Zahlencode bestehenden individuellen Code den Betätigungsorganen entsprechende Ziffern-Stellen im Zahlencode zugeordnet und die Anzahl der Betätigungen des zugeordneten Betätigungsorgans codiert die jeweilige Ziffer. Zweckmäßigerweise ist eine Verzögerungszeit zur Freischaltung der Betätigungsorgane für die Eingabe des individuellen Codes nach Auslösung des Umschaltbefehls zwischen dem aktivierten und inaktivierten Zustand vorgesehen, wobei der Ablauf der Verzögerungszeit beispielsweise durch ein Leuchtmittel am Gehäuse des Schlüssels angezeigt werden kann.

Die Umschaltung zwischen dem aktivierten und dem inaktivierten Zustand kann mittels eines der Betätigungsorgane auslösbar sein, wobei vorzugsweise die Schließtaste zur Umschaltung in den aktivierten Zustand und die Öffnungstaste zur Umschaltung in den inaktivierten Zustand verwendet werden. Genausogut kann am Gehäuse ein zusätzliches Betätigungsorgan, insbesondere eine Taste, zur Auslösung des Umschaltbefehls zwischen dem aktivierten und dem inaktivierten Zustand angeordnet sein.

Die Reaktivierung eines bereits programmierten individuellen Codes kann ebenfalls durch mehrmaliges unterbrochenes Betätigen eines der Betätigungsorgane, beispielsweise durch dreimaliges unterbrochenes Drücken der Schließtaste, erfolgen. Während des Fahrbetriebs des Kraftfahrzeugs kann durch längeres Betätigen eines beliebigen Betätigungsorgans ebenfalls eine Reaktivierung vorgenommen werden, so dass der Schlüssel nach Herausnahme aus dem Zündschloss ohne Kenntnis des individuellen Codes nicht brauchbar ist. Bei einem Überfall auf ein angehaltenes Kraftfahrzeug erbeutet der Dieb dann lediglich ein nachfolgend nicht mehr in Betrieb nehmbares Kraftfahrzeug. Um ein Herausfinden des individuellen Codes durch Probieren zu verhindern, kann ein Spielschutz durch eine bleibende Umschaltung in den aktivierten Zustand mit Sperrung des codierten Betriebssignals erfolgen, wenn mehrmals der falsche individuelle Code eingegeben wird. Eine Deaktivierung des blockierten Zustandes ist dann nur in der Werkstatt durch ein Zurücksetzen des Schlüssels mittels eines speziellen Codes, der auf den jeweiligen Schlüssel oder das Kraftfahrzeug bezogen ist, möglich.

Zur Visualisierung der Umschaltung in den aktivierten und/oder inaktivierten Zustand kann der Schlüssel eine Anzeige besitzen. Diese Anzeige läßt sich beispielsweise durch hochfrequentes, eine bestimmte Zeitspanne andauerndes Blinken eines Leuchtmittels am Gehäuse des Schlüssels realisieren, wobei das Blinken bei Betätigung eines Betätigungsorgans am Schlüssel im aktivierten Zustand erfolgt. Genausogut ist es möglich, daß bei Betätigung eines Betätigungsorgans eine Leuchtdiode am Gehäuse im aktivierten Zustand rot und im inaktivierten Zustand des Schlüssels grün aufleuchtet. Als Leuchtmittel kann beispielsweise die Batteriekontroll-Leuchte am Gehäuse des Schlüssels verwendet werden. Selbstverständlich kann nicht nur der jeweils gerade eingenommene Zustand des Schlüssels sondern auch der Übergang an sich zwischen dem aktivierten und inaktivierten Zustand angezeigt werden.

In einer besonderen Weiterbildung ist der Schlüssel in einen freigeschalteteten Zustand umschaltbar, in dem die Übertragung des codierten Betriebssignals lediglich für einen begrenzten Zeitraum, bis zu einem bestimmten Datum, für eine begrenzte Anzahl von Startvorgängen im Zündschloß o. dgl. freigegeben ist. Nach Ablauf des Zeitraumes, nach Erreichen des Datums, Erschöpfung der Anzahl der Startvorgänge o. dgl. schaltet der Schlüssel dann selbsttätig in den aktivierten Zustand um. Bevorzugterweise erfolgt die Programmierung der Daten für den freigeschalteten Zustand im inaktivierten Zustand, wobei zur Eingabe der Daten wiederum die Betätigungsorgane am Schlüssel verwendet werden können. Zur Bestimmung des Ablaufs des begrenzten Zeitraums oder des Erreichens des Datums für die Freischaltung kann der Schlüssel eine Echtzeituhr besitzen.

Als Hilfsmittel für den Benutzer bei der Programmierung des Schlüssels bietet es sich an, am Gehäuse eine Anzeige, wie ein Display, Leuchtdioden o. dgl. zur Visualisierung der Eingabe des individuellen Codes bzw. der Eingabe der Daten für den freigeschalteten Zustand anzuordnen. Auch eine bereits im Kraftfahrzeug befindliche Anzeige, wie ein Display am Lenkrad, das Kombiinstrument im Armaturenbrett o. dgl., läßt sich hierfür verwenden, wobei dann der Schlüssel zur Programmierung des individuellen Codes bzw. zur Programmierung für die Freischaltung in das Zündschloß des Kraftfahrzeugs eingeführt wird. Mit Hilfe einer derartigen Anzeige im Kraftfahrzeug läßt sich auf besonders einfache Weise eine Bedienerführung zur Eingabe bei der Programmierung erzielen. Gegebenenfalls können dann zur Eingabe auch der Anzeige zugeordnete Betätigungsorgane anstelle der am Gehäuse des Schlüssels befindlichen Betätigungsorgane verwendet werden.

Es bietet sich weiterhin an, die im Schlüssel gespeicherten sonstigen Daten, insbesondere die verbleibende Zeitdauer oder die verbleibende Anzahl der Startvorgänge im freigeschalteten Zustand, die Zeit der Echtzeituhr im Schlüssel usw. bei Bedarf in der Anzeige auszugeben. Zweckmäßigerweise läßt sich die Echtzeituhr über die Anzeige stellen und eine Übernahme der Uhrzeit des Kombiinstruments in den Schlüssel ist bei der Umschaltung in den freigeschalteten Zustand ermöglicht. Weiter läßt sich auch der Modus des Schlüssels, d.h. ob sich dieser im inaktivierten oder aktivierten Zustand befindet, in dieser Anzeige im Kraftfahrzeug ausgeben.

Befindet sich der Schlüssel im Zündschloß so kann gleichzeitig der Ladezustand einer für den bestimmungsgemäßen Betrieb des Schlüssels dienenden, im Gehäuse befindlichen Batterie zur Kontrolle in dieser Anzeige ausgegeben werden. Unterschreitet der Ladezustand eine gewisse Grenze, so wird der Benutzer durch eine Alarmfunktion hierauf aufmerksam gemacht. Es kann auch noch für weitere batteriebetriebene Verbraucher, beispielsweise für ein Handy, der Ladezustand in dieser Anzeige ausgegeben werden.

Die mit der Erfindung erzielten Vorteile bestehen insbesondere darin, daß eine individuelle Sicherung des Schlüssels gegen unbefugten Gebrauch durch den Benutzer auf einfache Weise vorgenommen werden kann. Diese individuelle Sicherung besteht in einer einfachen zusätzlichen Programmierung des Schlüssels mit einem mehrstelligen, insbesondere 2 oder 3-stelligen individuellen Zahlencode oder einem sprachlichen Code. Es ist besonders vorteilhaft, daß diese Sicherung durch die Programmierung des Schlüssels lediglich in gefährdeten Gebieten, wie beispielsweise im Hotel, Restaurant o. dgl. Erfolgen kann, während ansonsten der Schlüssel ohne diese individuelle Sicherung auf herkömmliche Weise verwendet werden kann.

Auch noch während der Fahrt, wobei sich der Schlüssel im Zündschloß des Kraftfahrzeugs befindet, kann eine schon einmal verwendete Programmierung erneut aktiviert werden. In einfacher Weise kann dies beispielsweise durch längeres Drücken einer der Betätigungsorgane am Schlüssel erfolgen. Dadurch läßt sich ohne Sicherheitsrisiko für den Fahrer das sogenannte "Carjacking" wirksam verhindern, indem der Dieb nachträglich feststellt, daß der Schlüssel für ihn nicht weiter verwendbar ist.

Die Handhabung des Schlüssels mit der erfindungsgemäßen Sicherheitsfunktion ist einfach. So lassen sich die am Schlüssel bereits vorhandenen Tasten auch zur Programmierung oder Aktivierung sowie zum Löschen oder Überschreiben bzw. zur Deaktivierung der individuellen Codierung verwenden. Auch die Wiederverwendung oder Reaktivierung der bereits gewählten Programmierung für den individuellen Code durch mehrmaliges, längeres Drücken eines Betätigungsorgans, beispielsweise durch 3-maliges Drücken der Schließtaste, ist möglich.

Besonders vorteilhaft ist es auch, ein bereits im Kraftfahrzeug vorhandenes Display, das sich beispielsweise im Kombiinstrument befinden kann, dazu zu verwenden, die im Schlüssel gespeicherten Daten zum Fahrzeug und Fahrer sowie zum Zustand des Schlüssels anzuzeigen. Ebenso kann zur Programmierung des Schlüssels eine Benutzerführung im Display erfolgen. Zusätzlich kann eine Anzeige des über einen automatischen Test ermittelten Batterie-Ladezustandes des Schlüssels im Display vorgenommen werden. Dadurch läßt sich die Ergonomie für den Schlüssel weiter steigern.

Da diese zusätzlichen Funktionen für den Schlüssel auch softwaretechnisch realisierbar sind, werden dann keine zusätzlichen Teile am Schlüssel benötigt. Somit ist ein hoher Sicherheitsgewinn unter geringen Mehrkosten möglich. Einmalige Mehrkosten fallen lediglich für einen etwas erhöhten Software-Aufwand in der Konstruktions- oder Entwicklungsphase an, wenn der Speicher des Mikrocontrollers im Schlüssel noch nicht voll belegt ist.

Ein Ausführungsbeispiel der Erfindung mit verschiedenen Weiterbildungen ist in den Zeichnungen dargestellt und wird im folgenden näher beschrieben. Es zeigen
- Fig. 1: schematisch eine Funktionsübersicht eines mittels eines elektronischen Schlüssels betätigbaren Schließsystems in einem Kraftfahrzeug,
- Fig. 2: ein schematisches Block-Schaltbild für den Schlüssel und
- Fig. 3: ein schematisches Block-Schaltbild für das Schließsystem eines Kraftfahrzeugs in einer Weiterbildung.

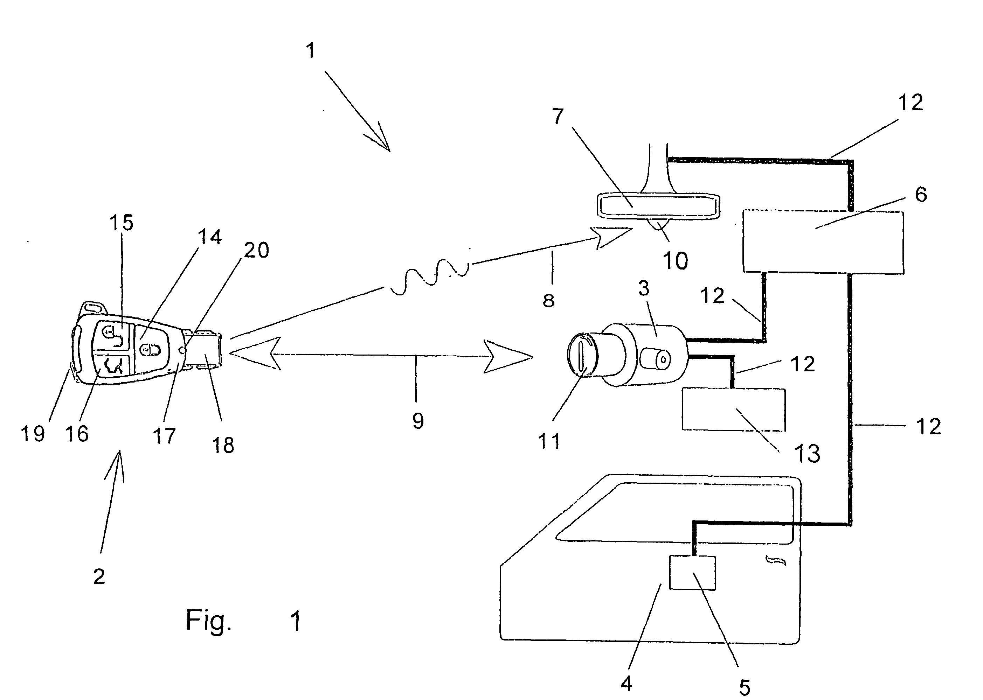

In Fig. 1 ist ein für ein Kraftfahrzeug bestimmtes Schließsystem 1 schematisch gemäß einem Teil seiner Funktionen gezeigt. Mit Hilfe eines elektronischen Schlüssels 2 läßt sich das Schließsystem 1 zur Zugangsberechtigung fernbedienbar ansteuern, im vorliegenden Fall lassen sich die Autotüren 4 sowie der nicht weiter gezeigte Kofferraumdeckel des Kraftfahrzeugs fernbedienbar bis zu einer gewissen maximalen Entfernung vom Kraftfahrzeug ver- und entriegeln, sowie gegebenenfalls noch weitere Funktionen am Kraftfahrzeug auslösen.

Zur Ansteuerung der genannten Funktionen dienen Betätigungsorgane 14, 15, 16 am Gehäuse 17 des Schlüssels 2, die vom Benutzer manuell betätigt werden. Die Betätigungsorgane 14, 15, 16 des Schlüssels 2 sind als Tasten ausgebildet und mit Symbolen versehen, die die entsprechenden Funktionen andeuten. Vorliegend sind es drei Tasten und zwar eine Schließtaste 14 zum Verriegeln der Autotüren 4, eine Öffnungstaste 15 zum Entriegeln der Autotüren 4 sowie eine Kofferraumtaste 16 zum Öffnen des Kofferraumdeckels.

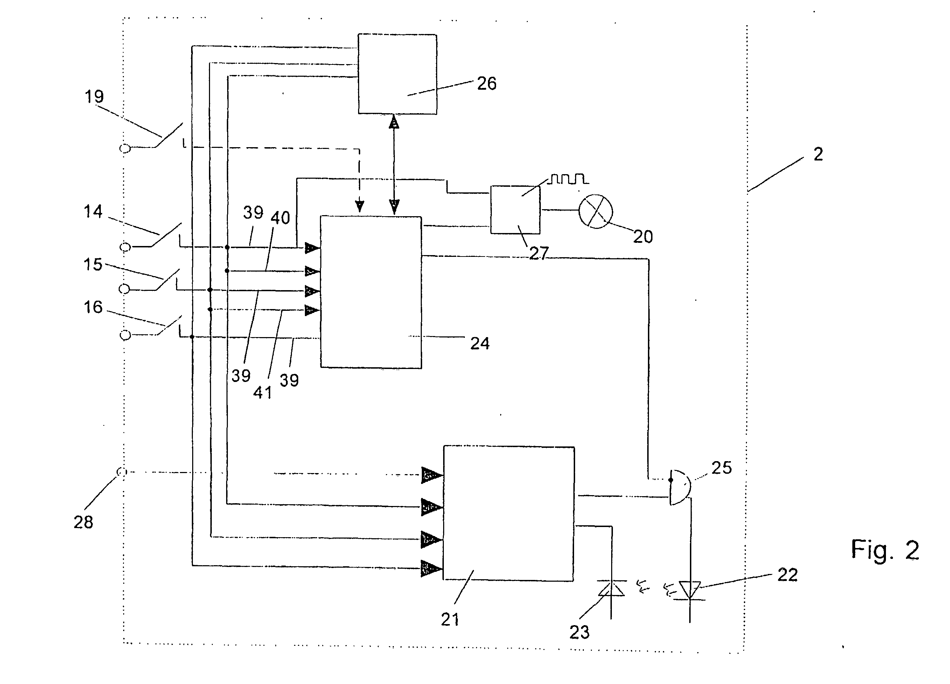

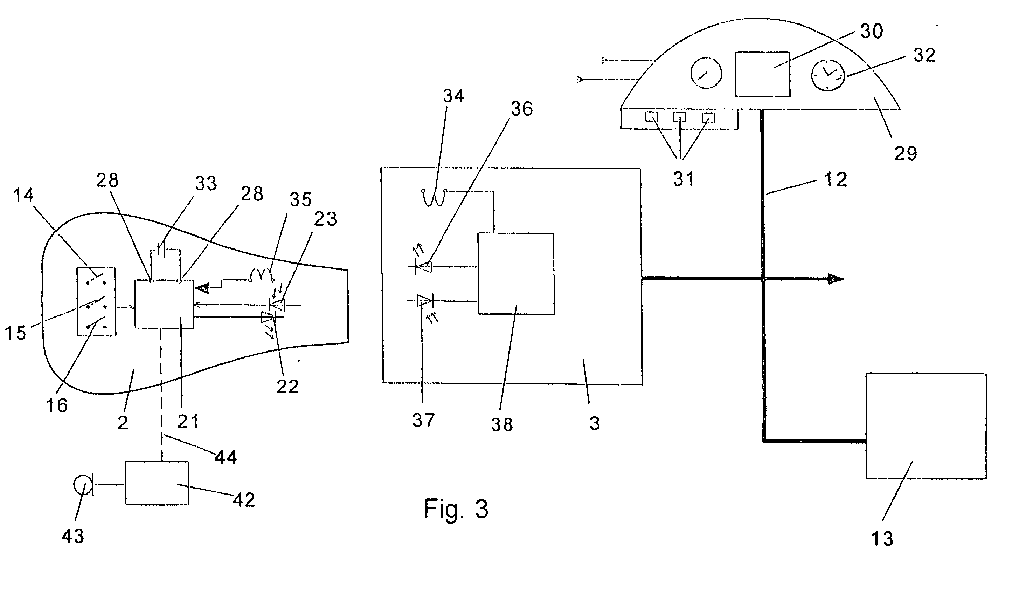

Im Gehäuse 17 sind zum bestimmungsgemäßen Betrieb des Schlüssels 2 dienende Mittel angeordnet. Bei diesen dem Frontteil 18 des Gehäuses 17 zugeordneten Mitteln, die von einer in Fig. 3 schematisch gezeigten, im Gehäuse 17 befindlichen Batterie 33 oder sonstigen Energiequelle mit Energie versorgt werden, handelt es sich um einen Sender 22 und gegebenenfalls um einen Empfänger 23, die in Fig. 2 näher zu sehen sind. Dadurch ist zwischen dem Schlüssel 2 und einer beispielsweise am Innenspiegel 7 zentral im Kraftfahrzeug angeordneten Empfangs- und Sendeeinrichtung 10 für das Schließsystem 1 ein codiertes Betriebssignal 8 übertragbar, wobei die Übertragung des Betriebssignals 8 mittels der Betätigungsorgane 14, 15, 16 auslösbar ist. Das übertragene Betriebssignal 8 wird einer im Kraftfahrzeug befindlichen Signalverarbeitungseinrichtung 6 zugeführt und nach positiver Auswertung des Betriebssignals 8, d.h. falls es sich um den berechtigten Schlüssel 2 handelt, wird ein beispielsweise in der jeweiligen Autotüre 4 befindliches Steuergerät 5, das mit der Signalverarbeitungseinrichtung 6 beispielsweise über ein Bussystem 12, wie den bekannten CAN-Bus, in Verbindung steht, zur Ver- oder Entriegelung der Autotüren 4 oder des Kofferraumdeckels betätigt. Bei dem Steuergerät 5 kann es sich zum Beispiel um eine an sich bekannte Zentralverriegelung handeln.

Mit dem elektronischen Schlüssel 2 ist in einer zusätzlichen Funktion die Wegfahrsperre des Kraftfahrzeugs betätigbar. Hierfür besitzt das Schließsystem 1 ein elektronisches Zündschloß 3, das mit einem zugehörigen Betriebsaggregat 13 in Verbindung steht. Beim Betriebsaggregat 13 kann es sich beispielsweise um die elektronische Motorsteuerung o. dgl. des Kraftfahrzeugs handeln. Nachdem der Schlüssel 2 mit seinem Frontteil 18 in eine Aufnahme 11 des Zündschlosses 3 eingeführt ist, wird der Schlüssel 2 über induktive Mittel 34 im Zündschloß 3 und korrespondierende induktive Mittel 35 im Schlüssel 2 mit Energie zum Betrieb der Schaltung 21 des Schlüssels 2 versorgt, wie in Fig. 3 gezeigt ist. Anschließend erfolgt der Austausch wenigstens eines codierten Betriebssignals 9 zwischen dem Schlüssel 2 und dem Zündschloß 3 über Sender 22 sowie Empfänger 23 im Schlüssel 2 und Sender 36 sowie Empfänger 37 im Zündschloß 3. Nach positiver Auswertung des Betriebssignals 9, wozu im Zündschloß 3 ein Mikrocontroller 38 und im Schlüssel 2 die Schaltung 21 angeordnet sind, wird das Zündschloß 3 freigegeben und das Betriebsaggregat 13 kann dann in Betrieb genommen werden. In Fig. 2 ist schematisch ein Blockschaltbild für die Funktionen des Schlüssels 2 gezeigt. Der Schlüssel 2 besitzt eine Schaltung 21 zur Generierung der Betriebssignale 8, 9 für die Zugangsberechtigung und die Wegfahrsperre. Die Betätigungsorgane 14, 15, 16 sind mit der Schaltung 21 verbunden, um die Erzeugung der entsprechenden Betriebssignale 8, 9 auszulösen. Als Betriebssignale 8, 9 für den Schlüssel 2 werden in der Regel elektromagnetische Signale, wie Hf-Signale und/oder Infrarot-Signale o. dgl., verwendet. Handelt es sich, wie in Fig. 2 beispielhaft gezeigt, um Infrarot-Signale, so ist mit der Schaltung 21 eine IR-Sendediode als Sender 22 und eine IR-Empfangsdiode als Empfänger 23 verbunden.

Zur Verbesserung der Diebstahlsicherheit ist der elektronische Schlüssel 2 mit einem zusätzlichen, individuellen Code durch den Benutzer programmierbar, wofür eine Schaltung 24 zur Programmierung im Schlüssel 2 angeordnet ist. Der Schlüssel 2 besitzt einen aktivierten Zustand, in dem die Übertragung des codierten Betriebssignals 8, 9 gesperrt ist und somit der bestimmungsgemäße Betrieb des Schlüssels 2 blockiert ist. Weiter besitzt der Schlüssel 2 einen inaktivierten Zustand, in dem die Übertragung des codierten Betriebsbssignals 8, 9 freigegeben ist, so daß der Schlüssel 2 bestimmungsgemäß betreibbar ist. Wie man aus Fig. 2 entnimmt, steuert die Schaltung 24 über ein Gatter 25, ob die Weiterleitung des Betriebssignals 8, 9 zum Sender 22 entsprechend dem inaktivierten Zustand freigegeben oder entsprechend dem aktivierten Zustand blockiert ist. Selbstverständlich kann die Funktion des Gatters 25 im Schlüssel 2 auch softwaretechnisch realisiert sein.

Zwischen dem aktivierten und inaktivierten Zustand ist der Schlüssel 2 umschaltbar, wobei ein Übergang vom aktivierten Zustand in den inaktivierten Zustand allerdings lediglich nach zusätzlicher Eingabe des richtigen individuellen Codes am Schlüssel 2 erfolgt. Umgekehrt kann beim Übergang vom inaktivierten in den aktivierten Zustand die Programmierung des individuellen Codes erfolgen, wobei bevorzugterweise ein früher programmierter, individueller Code überschrieben wird. Anstelle der Neuprogrammierung des individuellen Codes kann auch die Reaktivierung eines bereits früher programmierten individuellen Codes, insbesondere des zuletzt programmierten individuellen Codes, vorgenommen werden, falls der Schlüssel 2 schon wenigstens einmal mit einem individuellen Code programmiert wurde.

Vorteilhaft ist, daß der Schlüssel 2 nach Belieben des Benutzers in den aktivierten Zustand geschaltet werden kann. Der Benutzer hat also die freie Entscheidung, den Schlüssel 2 lediglich dann in den aktivierten Zustand zu schalten, wenn dieser tatsächlich benötigt wird. Beispielsweise kann es sich in gefährdeten Bereichen, wie in Hotels, Restaurants o. dgl. anbieten, den Schlüssel 2 in den aktivierten Zustand zu versetzen. Andererseits kann zum Beispiel eine Deaktivierung, d.h. der Schlüssel 2 wird in den inaktivierten Zustand versetzt, bei Abgabe des Schlüssels 2 in der Werkstatt vorgenommen werden. Der Schlüssel 2 ist dann voll funktionsfähig, ohne daß dem Werkstattpersonal der individuelle Code mitgeteilt werden müßte.

Zweckmäßigerweise wird für den individuellen Code ein Zahlencode in der Art einer PIN(Personal Identification Number)-Nummer verwendet. Es bietet sich dabei insbesondere an, einen dreistelligen Zahlencode als individuellen Code zu verwenden. Zur Eingabe des individuellen Codes bei der Programmierung des Schlüssels 2 werden die am Gehäuse 17 befindlichen Betätigungsorgane 14, 15, 16 verwendet, wobei die entsprechenden Ziffern-Stellen im Zahlencode jeweils einem Betätigungsorgan 14, 15, 16 zugeordnet sind. Beispielsweise kann die erste Ziffernstelle der Schließtaste 14, die zweite Ziffernstelle der Öffungstaste 15 und die dritte Ziffernstelle der Kofferraumtaste 16 zugeordnet sein. Die Anzahl der Betätigungen des zugeordneten Betätigungsorgans 14, 15, 16 codiert die jeweilige Ziffer. Beispielsweise codiert eine fünfmalige Betätigung der Schließtaste 14 die Ziffer "Fünf" in der ersten Stelle des individuellen Codes. Wird das jeweilige Betätigungsorgan 14, 15, 16 nicht betätigt, so codiert dies die Ziffer "Null". Bei mehr als neun Betätigungen handelt es sich um eine falsche Eingabe oder es wird alternativ die Anzahl der Betätigungen modulo 10 gezählt. Die Eingabe der jeweiligen Ziffer wird über Leitungen 39 der Schaltung 24 für die Programmierung zugeführt.

Zur Auslösung der Umschaltung zwischen dem aktivierten und dem inaktivierten Zustand ist am Gehäuse 17 ein zusätzliches Betätigungsorgan 19, das als Taste ausgebildet sein kann, angeordnet. Die Betätigung des zusätzlichen Betätigungsorgans 19 durch den Benutzer liefert ein Signal zur Schaltung 24 für die Programmierung. Befindet sich der Schlüssel 2 im aktivierten Zustand, so wird anschließend die Eingabe des individuellen Codes über die Betätigungsorgane 14, 15, 16 vorgenommen und diese Eingabe durch die Schaltung 24 darauf überprüft, ob es sich um den richtigen individuellen Code handelt. Nur wenn dies der Fall ist, erfolgt eine Umschaltung in den inaktivierten Zustand, wobei die Schaltung 24 die Übertragung des Betriebssignals 8, 9 am Gatter 25 freigibt. Befindet sich andererseits der Schlüssel 2 im inaktivierten Zustand, so erfolgt ein Umschalten in den aktivierten Zustand und der Benutzer kann dann über die Betätigungsorgane 14, 15, 16 einen neuen individuellen Code in die Schaltung 24 eingeben oder einen früheren individuellen Code in der Schaltung 24 reaktivieren.

Anstelle eines zusätzlichen Betätigungsorgans 19 kann alternativ die Umschaltung zwischen dem aktivierten und dem inaktivierten Zustand auch mittels eines der Betätigungsorgane 14, 15, 16 selbst auslösbar sein. In Fig. 2 ist das Vorhandensein eines zusätzlichen Betätigungsorgans 19 als Alternative dadurch angedeutet, daß die Verbindung zwischen dem zusätzlichen Betätigungsorgan 19 und der Schaltung 24 gestrichelt eingezeichnet ist. Bevorzugterweise wird die Schließtaste 14 über die Leitung 40 zur Umschaltung in den aktivierten Zustand und die Öffnungstaste 15 über die Leitung 41 zur Umschaltung in den inaktivierten Zustand verwendet. Ebenso kann die Umschaltung auch durch gleichzeitiges Betätigen von zwei der drei Betätigungsorgane 14, 15, 16 auslösbar sein. Ansonsten verläuft die Umschaltung analog zu der obigen Beschreibung. Es bietet sich dann jedoch an, eine Verzögerungszeit zur Freischaltung der Betätigungsorgane 14, 15, 16 für die Eingabe des individuellen Codes nach Auslösung des Umschaltbefehls vorzusehen, um eine versehentliche Falscheingabe für den individuellen Code auszuschließen. Der Ablauf der Verzögerungszeit und damit die Bereitschaft zur Eingabe des individuellen Codes kann beispielsweise durch das Aufleuchten eines Leuchtmittels 20 am Gehäuse 17 angezeigt werden.

Wie bereits erwähnt, kann auch die Reaktivierung eines bereits programmierten, alten individuellen Codes bei der Umschaltung vom inaktivierten in den aktivierten Zustand vorgenommen werden. Eine derartige Reaktivierung kann insbesondere durch mehrmaliges unterbrochenes Betätigen eines Betätigungsorgans 14, 15, 16 erfolgen, beispielsweise durch dreimaliges unterbrochenes Drücken der Schließtaste 14. Vorteilhafterweise wird dadurch die Eingabe des individuellen Codes beim Programmieren des Schlüssels 2 eingespart. Lediglich wenn der Benutzer einen neuen individuellen Code in die Schaltung 24 programmieren und dabei den alten individuellen Code überschreiben möchte, ist dann eine komplette Neueingabe erforderlich.

Weiter kann es auch zweckmäßig sein, wenn während des Fahrbetriebs des Kraftfahrzeugs, wobei der Schlüssel 2 mit seinem Frontteil 18 im Zündschloß 2 eingeführt ist, die Umschaltung in den aktivierten Zustand unter Reaktivierung des alten individuellen Codes durch längeres Betätigen eines beliebigen Betätigungsorgans 14, 15, 16 vorgenommen werden kann. Damit kann bei einem Überfall auf das Kraftfahrzeug mit laufendem Motor, beispielsweise an einer roten Ampel, der Schlüssel 2 unauffällig für die zukünftige Benutzung unbrauchbar gemacht werden. Sobald der Dieb den Motor ausschaltet, kann das Fahrzeug nicht mehr gestartet werden, da der Schlüssel 2 sich dann im aktivierten Zustand befindet.

Um zu verhindern, daß der individuelle Code dennoch durch Probieren herausgefunden wird, kann eine Art von Spielschutz als Schaltung 26 im Schlüssel 2 eingebaut sein. Die Schaltung 26 arbeitet mit der Schaltung 24 für die Programmierung derart zusammen, daß dann automatisch der aktivierte Zustand mit Sperrung des codierten Betriebssignals 8, 9 bleibend eingestellt ist, wenn mehrmals der falsche individuelle Code eingegeben wird. Ein gestohlener Schlüssel 2 wird dann vollständig unbrauchbar, selbst wenn zu einem späteren Zeitpunkt der richtige individuelle Code eingegeben wird. Eine Deaktivierung dieses bleibend eingestellten aktivierten Zustandes ist dann nur von autorisierten Personen möglich, beispielsweise in der Werkstatt, wo ein Rücksetzen des Schlüssels 2 in den inaktivierten Zustand unter Löschung des alten individuellen Codes mit Hilfe eines speziellen Codes, der dem jeweiligen Schlüssel 2 oder Kraftfahrzeug zugeordnet ist, möglich ist.

Es kann zweckmäßig sein, wenn dem Benutzer der Zustand des Schlüssels 2 über eine Anzeige am Gehäuse 17 visualisiert wird. Befindet sich der Schlüssel 2 im aktivierten Zustand und wird eines der Betätigungsorgane 14, 15, 16 betätigt oder der Schlüssel 2 in das Zündschloß 3 eingeführt, so kann diese Anzeige dem Benutzer visualisieren, daß die Übertragung der Betriebssignale 8, 9 gesperrt ist. Damit wird der Benutzer darauf hingewiesen, daß er zunächst eine Umschaltung in den inaktivierten Zustand durch Eingabe des individuellen Codes vorzunehmen hat. Diese Anzeige kann beispielsweise durch hochfrequentes Blinken des Leuchtmittels 20 am Gehäuse 17 erfolgen, wobei das Leuchtmittel 20 während einer gewissen Zeit von einer Blinkschaltung 27 angesteuert wird. Es bietet sich an, als Leuchtmittel 20 die Batteriekontroll-Leuchte des Schlüssels 2 zu verwenden. Die Batteriekontroll-Leuchte zeigt den Batterie-Ladezustand im Sinne von "In Ordnung" oder "Nicht in Ordnung" an, nachdem ein entsprechender Test bei der Betätigung eines der Betätigungsorgane 14, 15, 16 durchgeführt ist. Das Leuchtmittel 20 kann auch als eine Leuchtdiode ausgebildet sein, die im aktivierten Zustand rot und im inaktivierten Zustand grün aufleuchtet. Selbstverständlich kann das Leuchtmittel 20 dem Benutzer auch visualisieren, daß eine Umschaltung in den aktivierten und/oder inaktivierten Zustand des Schlüssels 2 stattgefunden hat.

Zur Vereinfachung der Programmierung des Schlüssels 2 kann am Gehäuse zusätzlich eine Anzeige für die Visualisierung der Eingabe des individuellen Codes angeordnet sein. Bei der Anzeige kann es sich um ein Display handeln, das die jeweils eingebene Ziffer anzeigt. Es kann jedoch auch genügen eine Leuchtdiode, bei der es sich um das Leuchtmittel 20 handeln kann, oder auch mehrere Leuchtdioden o. dgl. zu verwenden. Bei jeder Betätigung des Betätigungsorgans 14, 15, 16 zur Eingabe der jeweiligen Ziffer des individuellen Codes leuchtet das Leuchtmittel 20 dann auf, so daß der Benutzer durch Mitzählen die jeweils eingebene Ziffer feststellen kann.

Es kann sich auch anbieten, zur Visualisierung der Eingabe bei der Programmierung des individuellen Codes oder des Zustandes, in dem sich der Schlüssel 2 befindet, eine im Kraftfahrzeug befindliche Anzeige, wie ein Display am Lenkrad, im Kombiinstrument am Armaturenbrett oder an sonstiger Stelle im Kraftfahrzeug, zu verwenden. Eine derartige Weiterbildung ist in Fig. 3 gezeigt, wo das Kombiinstrument 29 mit dem Zündschloß 3 über das Bussystem 12 verbunden ist und ein Display 30 im Kombiinstrument 29 befindlich ist.

Der Schlüssel 2 wird zur Programmierung des individuellen Codes in das Zündschloß 3 des Kraftfahrzeugs eingeführt. Der bei der Programmierung eingegebene individuelle Code wird dann im Display 30 im Kraftfahrzeug ausgegeben und kann gegebenenfalls noch korrigiert werden. Gleichzeitig kann auch eine entsprechende Bedienerführung im Klartext oder mit Symbolen im Display 30 erfolgen. Gegebenenfalls kann es sich dann anbieten, dem Display 30 zugeordnete Betätigungsorgane 31 anstelle der am Schlüssel 2 befindlichen Betätigungsorgane 14, 15, 16 für die Eingabe bei der Programmierung zu verwenden.

Anstelle eines Zahlencodes für den individuellen Code ist auch als Code eine sprachliche Verschlüsselung denkbar. Wie in Fig. 3 noch alternativ gezeigt ist, steht mit der Schaltung 21 zur Generierung der Betriebssignale 8, 9 eine Schaltung 42 zur Spracherkennung in Verbindung. Die Schaltung 42 kann sich im Schlüssel 2 selbst oder auch im Kraftfahrzeug befinden, beispielsweise mit dem Kombiinstrument 29 in Verbindung stehen, weswegen die Verbindungslinie 44 zwischen der Schaltung 42 und der Schaltung 21 mit gestrichelten Linien eingezeichnet ist. Mit der Schaltung 42 steht ein Mikrofon 43 in Verbindung, so daß der individuelle Code sprachlich durch den Benutzer eingebbar ist. Die Spracherkennung kann sprecherabhängig oder auch sprecherunabhängig erfolgen, insbesondere können die Befehle "Aktivieren" oder "Inaktivieren" vom Benutzer über das Mikrofon 43 eingebbar sein.

In einer Weiterbildung ist der elektronische Schlüssel 2 in einen weiteren Zustand umschaltbar. Bei diesem weiteren Zustand ist die Übertragung des codierten Betriebssignals 8, 9 lediglich für einen begrenzten Zeitraum freigegeben, so daß im folgenden dieser weitere Zustand als freigeschalteter Zustand bezeichnet wird. Nach Ablauf des Zeitraumes schaltet dann der Schlüssel 2 selbsttätig in den aktivierten Zustand um. Der Inhaber des Schlüssels 2 kann dadurch verhindern, daß das Kraftfahrzeug über den begrenzten Zeitraum hinaus von einem Dritten benutzt werden kann, was sich insbesondere beim Verleihen oder Vermieten des Kraftfahrzeugs anbieten kann. Lediglich der Inhaber kann aufgrund der Kenntnis des individuellen Codes den Schlüssel 2 danach wieder in den inaktivierten Zustand schalten.

Genausogut kann der freigeschaltete Zustand durch sonstige Daten charakterisiert sein, beispielsweise kann eine Freigabe bis zu einem bestimmten Datum, für eine begrenzte Anzahl von Startvorgängen im Zündschloß 3 o. dgl. erfolgen. Dann schaltet der Schlüssel 2 nach Erreichen dieses Datums bzw. nach Erschöpfung der Anzahl der Startvorgänge in den aktivierten Zustand um.

Die Programmierung der Daten für den freigeschalteten Zustand erfolgt im inaktivierten Zustand. Zur Eingabe dieser Daten können wiederum die Betätigungsorgane 14, 15, 16 am Schlüssel 2 dienen. Soll ein begrenzter Zeitraum eingegeben werden, so kann beispielsweise dieSchließtaste 14 für die Anzahl der Stunden, die Öffnungstaste 15 für die Tage und die Kofferraumtaste 16 für die Monate des Zeitraums verwendet werden.

Wie bereits im Hinblick auf den individuellen Code näher erläutert kann eine Anzeigeeinrichtung am Gehäuse 17 des Schlüssels 2 oder ein in Fig. 3 gezeigtes Display 30 im Kraftfahrzeug zur Visualisierung der Daten für den freigeschalteten Zustand, also beispielsweise die verbleibende Zeitdauer der Freischaltung oder die Anzahl der verbleibenden Startvorgänge, sowie zur Bedienerführung bei der Programmierung des Schlüssels 2 für die Freischaltung dienen.
Selbstverständlich können über das Display 30 auch sonstige im Schlüssel 2 gespeicherte Daten anzeigbar sein, sobald der Schlüssel 2 in das Zündschloß 3 eingeführt ist. Bei diesen sonstigen Daten kann es sich beispielsweise um im Schlüssel 2 gespeicherte Fahrer- sowie Fahrzeug-Daten handeln. Insbesondere kann angezeigt werden, welchem Fahrer der Schlüssel 2 zugeordnet ist. Mit Hilfe der gespeicherten Fahrerdaten kann beispielsweise automatisch eine dem jeweiligen Fahrer zugeordnete Spiegel- und Sitzverstellung o. dgl. Im Kraftfahrzeug vorgenommen werden.

Im Schlüssel 2 befindet sich eine Echtzeituhr zur Bestimmung des Ablaufs des begrenzten Zeitraums oder für das Erreichen des Datums. Die jeweilige Uhrzeit der Echtzeituhr kann dann im Display 30 im Kombiinstrument 29 angezeigt sowie auch gestellt werden. Zweckmäßigerweise ist eine Übernahme der Uhrzeit der im Kombiinstrument 29 befindlichen Uhr 32 in den Schlüssel 2 bei der Umschaltung in den freigeschalteten Zustand möglich.

Weiter kann auch der Ladezustand der für den bestimmungsgemäßen Betrieb des Schlüssels 2 dienenden, im Gehäuse 17 befindlichen Batterie 33 oder sonstigen Energiequelle, die über einen Anschluß 28 die Schaltungen 21, 24, 26, 27 usw. im Schlüssel 2 mit Spannung versorgt, durch einen automatischen Test überprüft und zur Kontrolle für den Benutzer in dieser Anzeige 30 im Kraftfahrzeug ausgegeben werden. Eine Überwachung dieser Spannung löst dann beispielsweise einen Hinweis für den Fahrer aus, wenn die Batterie 33 nur noch eine geringe Ladung besitzt. Selbstverständlich kann auch noch für weitere batteriebetriebene Verbraucher im Kraftfahrzeug, wie Handys o. dgl., der Ladezustand überwacht und in der Anzeige 30 ausgegeben werden.

Die Erfindung ist nicht auf das beschriebene und dargestellte Ausführungsbeispiel beschränkt. Sie umfaßt vielmehr auch alle fachmännischen Weiterbildungen im Rahmen des Erfindungsgedankens. So kann die Erfindung nicht nur bei SchlüsseIn für Kraftfahrzeuge sondern auch an Schlüsseln für mit elektronischen Schlössern versehenen Haustüren, Garagentüren o. dgl. Verwendung finden. Auch an Fernbedienungen, beispielsweise für Fernsehgeräte o. dgl., läßt sich die Erfindung einsetzen.

### Bezugszeichen-Liste:

- 1:: Schließsystem
- 2:: elektronischer Schlüssel
- 3:: Zündschloß
- 4:: Autotüre
- 5:: Steuergerät
- 6:: Signalverarbeitungseinrichtung
- 7:: Innenspiegel
- 8:: Betriebssignal (für Autotür)
- 9:: Betriebssignal (für Zündschloß)
- 10:: Empfangs- und Sendeeinrichtung
- 11:: Aufnahme (am Zündschloß)
- 12:: Bussystem
- 13:: Betriebsaggregat
- 14,15, 16:: Betätigungsorgan (am Schlüssel)
- 17:: Gehäuse (des Schlüssels)
- 18:: Frontteil (des Schlüssels)
- 19:: zusätzliches Betätigungsorgan
- 20:: Leuchtmittel
- 21:: Schaltung (für Zugangsberechtigung und Wegfahrsperre)
- 22:: Sender (im Schlüssel)
- 23:: Empfänger (im Schlüssel)
- 24:: Schaltung (für Programmierung)
- 25:: Gatter
- 26:: Schaltung (für Spielschutz)
- 27:: Blinkschaltung
- 28:: Anschluß (für Batterie)
- 29:: Kombiinstrument
- 30:: Display, Anzeige
- 31:: Betätigungsorgan (der Anzeige zugeordnet)
- 32:: Uhr (im Kombiinstrument)
- 33:: Batterie (im Schlüssel)
- 34:: induktives Mittel (im Zündschloß)
- 35:: induktives Mittel (im Schlüssel)
- 36:: Sender (im Zündschloß)
- 37:: Empfänger (im Zündschloß)
- 38:: Mikrocontroller (im Zündschloß)
- 39:: Leitung (für Eingabe von Ziffer)
- 40:: Leitung (für Umschaltung in aktivierten Zustand)
- 41:: Leitung (für Umschaltung in inaktivierten Zustand)
- 42:: Schaltung (für Spracherkennung)
- 43:: Mikrofon
- 44:: Verbindungslinie

## Patentansprüche

1. Elektronischer Schlüssel für ein Schließsystem (1), insbesondere Türschließ- und/oder Zündschloßsystem an einem Kraftfahrzeug, mit zum bestimmungsgemäßen Betrieb des elektronischen Schlüssels (2) dienenden Mitteln, wie Sender (22) und gegebenenfalls Empfänger (23), wobei im bestimmungsgemäßen Betrieb zwischen dem elektronischen Schlüssel (2) und dem Schließsystem (1) wenigstens ein codiertes Betriebssignal (8, 9) übertragbar ist, so daß nach positiver Auswertung des übertragenen Betriebssignals (8, 9) Funktionen des Schließsystems (1) betätigt werden, wie bei einem Kraftfahrzeug die Zugangsberechtigung durch Ver- oder Entriegeln der Autotüren (4), die Wegfahrsperre durch Freigabe des Zündschlosses (3) o. dgl., und wobei der Schlüssel (2) mit einem zusätzlichen, die Freigabe der Übertragung des codierten Betriebssignals (8, 9) bewirkenden individuellen Code, insbesondere einem Zahlencode oder einem sprachlichen Code, durch den Benutzer programmierbar ist, **dadurch gekennzeichnet, daß** der Schlüssel (2) einen aktivierten Zustand, in dem die Übertragung des codierten Betriebssignals (8, 9) entsprechend dem bestimmungsgemäßen Betrieb gesperrt ist, sowie einen inaktivierten Zustand, in dem die Übertragung des codierten Betriebssignals (8, 9) entsprechend dem bestimmungsgemäßen Betrieb freigegeben ist, besitzt, daß der Schlüssel (2) zwischen dem aktivierten und inaktivierten Zustand umschaltbar ist, daß ein Übergang vom aktivierten Zustand in den inaktivierten Zustand lediglich nach zusätzlicher Eingabe des individuellen Codes am Schlüssel (2) erfolgt, und daß beim Übergang vom inaktivierten in den aktivierten Zustand die Programmierung des individuellen Codes oder die Reaktivierung eines bereits programmierten individuellen Codes vorgenommen wird.

2. Elektronischer Schlüssel nach Anspruch 1, **dadurch gekennzeichnet, daß** die zum bestimmungsgemäßen Betrieb dienenden Mittel in einem Gehäuse (17) des Schlüssels (2) angeordnet sind, daß sich am Gehäuse (17) Betätigungsorgane (14, 15, 16) zur Auslösung der Übertragung des codierten Betriebssignals (8) befinden, und daß es sich vorzugsweise bei den Betätigungsorganen (14, 15, 16) um Tasten handelt, insbesondere um drei Tasten und zwar um eine Schließtaste (14) zum Verriegeln der Autotüren (4), um eine Öffnungstaste (15) zum Entriegeln der Autotüren (4) sowie um eine Kofferraumtaste (16) zum Öffnen des Kofferraumdeckels.

3. Elektronischer Schlüssel nach Anspruch 1 oder 2, **dadurch gekennzeichnet, daß** die Eingabe des individuellen Codes mittels der am Gehäuse (17) befindlichen Betätigungsorgane (14, 15, 16) erfolgt, daß vorzugsweise bei einem aus einem Zahlencode bestehenden individuellen Code den Betätigungsorganen (14, 15, 16) entsprechende Ziffern-Stellen im Zahlencode zugeordnet sind, wobei die Anzahl der Betätigungen des zugeordneten Betätigungsorgans (14, 15, 16) die jeweilige Ziffer codiert, und daß weiter vorzugsweise eine Verzögerungszeit zur Freischaltung der Betätigungsorgane (14, 15, 16) für die Eingabe des individuellen Codes nach Auslösung des Umschaltbefehls vorhanden ist, wobei der Ablauf der Verzögerungszeit durch ein Leuchtmittel (20) o. dgl. am Gehäuse (17) angezeigt werden kann.

4. Elektronischer Schlüssel nach Anspruch 1, 2 oder 3, **dadurch gekennzeichnet, daß** am Gehäuse (17) ein zusätzliches Betätigungsorgan (19), insbesondere eine Taste, zur Auslösung der Umschaltung zwischen dem aktivierten und dem inaktivierten Zustand angeordnet ist.

5. Elektronischer Schlüssel nach Anspruch 1, 2 oder 3, **dadurch gekennzeichnet, daß** die Umschaltung zwischen dem aktivierten und dem inaktivierten Zustand mittels eines Betätigungsorgans (14, 15, 16) auslösbar ist, wobei vorzugsweise die Schließtaste (14) zur Umschaltung in den aktivierten Zustand und die Öffnungstaste (15) zur Umschaltung in den inaktivierten Zustand verwendet werden, oder daß die Umschaltung durch gleichzeitiges Betätigen zweier Betätigungsorgane (14, 15, 16) auslösbar ist.

6. Elektronischer Schlüssel nach einem der Ansprüche 1 bis 5, **dadurch gekennzeichnet, daß** die Reaktivierung eines bereits programmierten individuellen Codes bei der Umschaltung vom inaktivierten in den aktivierten Zustand durch mehrmaliges unterbrochenes Betätigen eines Betätigungsorgans (14, 15, 16), insbesondere durch dreimaliges unterbrochenes Drücken der Schließtaste (14), oder während des Fahrbetriebs des Kraftfahrzeugs durch längeres Betätigen eines beliebigen Betätigungsorgans (14, 15, 16) vorgenommen werden kann, und daß vorzugsweise der aktivierte Zustand mit Sperrung des codierten Betriebssignals (8, 9) in der Art eines Spielschutzes bleibend eingestellt ist, wenn mehrmals der falsche individuelle Code eingegeben wird, wobei insbesondere das Rücksetzen in den inaktivierten Zustand dann nur mit Hilfe eines speziellen Codes, beispielsweise in der Werkstatt, möglich ist.

7. Elektronischer Schlüssel nach einem der Ansprüche 1 bis 6, **dadurch gekennzeichnet, daß** eine Anzeige für den aktivierten und/oder inaktivierten Zustand und/oder für die Umschaltung in den aktivierten bzw. inaktivierten Zustand des Schlüssels (2) vorhanden ist, wobei die Anzeige beispielsweise durch hochfrequentes Blinken während einer bestimmten Zeit eines Leuchtmittels (20) am Gehäuse (17), insbesondere der Batteriekontroll-Leuchte, oder über eine Leuchtdiode am Gehäuse (17) mit rotem Aufleuchten im aktivierten Zustand und grünem Aufleuchten im inaktivierten Zustand erfolgt.

8. Elektronischer Schlüssel nach einem der Ansprüche 1 bis 7, **dadurch gekennzeichnet, daß** der Schlüssel (2) in einen freigeschalteteten Zustand umschaltbar ist, in dem die Übertragung des codierten Betriebssignals (8, 9) lediglich für einen begrenzten Zeitraum, bis zu einem bestimmten Datum, für eine begrenzte Anzahl von Startvorgängen im Zündschloß (3) o. dgl. freigegeben ist, und daß nach Ablauf des Zeitraumes, nach Erreichen des Datums, Erschöpfung der Anzahl der Startvorgänge o. dgl. der Schlüssel (2) selbsttätig in den aktivierten Zustand umschaltet, wobei vorzugsweise die Programmierung der Daten für den freigeschalteten Zustand im inaktivierten Zustand erfolgt.

9. Elektronischer Schlüssel nach Anspruch 8, **dadurch gekennzeichnet, daß** die Betätigungsorgane (14, 15, 16) am Schlüssel (2) zur Eingabe der Daten für den freigeschalteten Zustand dienen, beispielsweise daß zur Eingabe des begrenzten Zeitraums die Schließtaste (14) für die Stunden, die Öffnungstaste (15) für die Tage und die Kofferraumtaste (16) für die Monate verwendet werden, und daß vorzugsweise der Schlüssel (2) eine Echtzeituhr zur Bestimmung des Ablaufs des begrenzten Zeitraums, des Erreichens des Datums o. dgl. besitzt.

10. Elektronischer Schlüssel nach einem der Ansprüche 1 bis 9, **dadurch gekennzeichnet, daß** am Gehäuse (17) eine Anzeige, wie ein Display, wenigstens eine Leuchtdiode o. dgl. zur Visualisierung der Eingabe des individuellen Codes und/oder zur Bedienerführung bei der Programmierung des Schlüssels (2), zur Visualisierung der Daten für den freigeschalteten Zustand, von im Schlüssel (2) gespeicherten sonstigen Daten o. dgl. angeordnet ist.

11. Elektronischer Schlüssel nach einem der Ansprüche 1 bis 10, **dadurch gekennzeichnet, daß** eine im Kraftfahrzeug befindliche Anzeige (30), wie ein Display am Lenkrad, im Kombiinstrument (29) am Armaturenbrett o. dgl., zur Visualisierung der Eingabe des individuellen Codes und/oder zur Bedienerführung bei der Programmierung des Schlüssels (2), zur Visualisierung der Daten für den freigeschalteten Zustand, von im Schlüssel (2) gespeicherten sonstigen Daten o. dgl. verwendet wird, wobei insbesondere der Schlüssel (2) zur Programmierung des individuellen Codes und/oder zur Visualisierung der im Schlüssel (2) abgespeicherten Daten für den freigeschalteten Zustand bzw. sonstiger Daten in das Zündschloß (3) des Kraftfahrzeugs eingeführt wird, daß gegebenenfalls der Anzeige (30) zugeordnete Betätigungsorgane (31) für die Eingabe bei der Programmierung verwendet werden, und daß vorzugsweise der Ladezustand einer für den bestimmungsgemäßen Betrieb des Schlüssels (2) dienenden Batterie (33) oder sonstigen Energiequelle zur Kontrolle sowie gegebenenfalls der Zustand, in dem sich der Schlüssel (2) befindet, in der Anzeige (30) ausgebbar sowie gegebenenfalls überwachbar sind.

12. Elektronischer Schlüssel nach Anspruch 11, **dadurch gekennzeichnet, daß** die Echtzeituhr im Schlüssel (2) über das Display (30) am Kombiinstrument (29) o. dgl. angezeigt und/oder gestellt werden kann, und daß vorzugsweise eine Übernahme der Uhrzeit der Uhr (32) des Kombiinstruments (29) in den Schlüssel (2) bei der Umschaltung in den freigeschalteten Zustand erfolgt.

## Claims

1. Electronic key for a locking system (1), in particular a door locking and/or ignition locking system on a motor vehicle, with means used for operation according to requirements of the electronic key (2), such as a transmitter (22) and optionally a receiver (23), wherein in operation according to requirements, at least one coded operating signal (8, 9) can be transmitted between the electronic key (2) and the locking system (1), so after positive evaluation of the transmitted operating signal (8, 9), functions of the locking system (1) are actuated, as in a motor vehicle the access authorisation by locking and unlocking the car doors (4), the immobiliser by releasing the ignition lock (3) or the like, and wherein the key (2) can be programmed by the user with an additional individual code causing the release of transmission of the coded operating signal (8, 9), in particular a number code or a language code, **characterised in that** the key (2) has an activated state in which the transmission of the coded operating signal (8, 9) is blocked corresponding to operation according to requirements, and an inactivated state, in which transmission of the coded operating signal (8, 9) is released corresponding to operation according to requirements, **in that** the key (2) can be switched between the activated and inactivated state, **in that** a transition from the activated state into the inactivated state takes place only after additional input of the individual code at the key (2), and **in that** during transition from the inactivated into the activated state, programming of the individual code or the reactivation of an already programmed individual code is carried out.

2. Electronic key according to claim 1, **characterised in that** the means used for operation according to requirements are arranged in a housing (17) of the key (2), **in that** actuating members (14, 15, 16) for triggering the transmission of the coded operating signal (8) are located on the housing (17) and **in that** the actuating members (14, 15, 16) are preferably buttons, in particular three buttons and more precisely a locking button (14) for locking the car doors (4), an opening button (15) for unlocking the car doors (4) and a boot button (16) for opening the boot lid.

3. Electronic key according to claim 1 or 2, **characterised in that** the individual code is input by means of the actuating members (14, 15, 16) located on the housing (17), **in that** in the case of an individual code consisting of a number code, corresponding digit positions in the number code are preferably associated with the actuating members (14, 15, 16), the number of actuations of the associated actuating member (14, 15, 16) coding the respective digits, and **in that** more preferably a delay time for clearing the actuating members (14, 15, 16) is available for inputting the individual code after triggering the switching operation command, wherein the expiry of the delay time can be indicated by an illuminated means (20) or the like on the housing (17).

4. Electronic key according to claim 1, 2 or 3, **characterised in that** an additional actuating means (19), in particular a button, is arranged on the housing (17) to trigger the switching operation between the activated and the inactivated state.

5. Electronic key according to claim 1, 2 or 3, **characterised in that** the switching operation between the activated and the inactivated state can be triggered by means of an actuating member (14, 15, 16), the locking button (14) preferably being used for switching over into the activated state and the opening button (15) being used for switching over into the inactivated state, or **in that** the switching operation can be triggered by simultaneous actuation of two actuating members (14, 15, 16).

6. Electronic key according to any one of claims 1 to 5, **characterised in that** the reactivation of an already programmed individual code during the switching operation from the inactivated into the activated state can be carried out by frequent interrupted actuation of an actuating member (14, 15, 16), in particular by triple interrupted pressing of the locking button (14) or, during the driving operation of the motor vehicle, by relatively long actuation of any actuating member (14, 15, 16), and **in that** the activated state with blocking of the coded operating signal (8, 9) is preferably permanently adjusted in the manner of a game protection, if the incorrect individual code is repeatedly input, wherein in particular resetting into the inactivated state is then only possible with the aid of a special code, for example in the workshop.

7. Electronic key according to any one of claims 1 to 6, **characterised in that** an indicator for the activated and/or inactivated state and/or the switching operation into the activated or inactivated state of the key (2) is present, the indication taking place, for example by very frequent flashing for a specific time of an illuminated means (20) on the housing (17), in particular of the battery control light, or via a light-emitting diode on the housing (17) with red illumination in the activated state and green illumination in the inactivated state.

8. Electronic key according to any one of claims 1 to 7, **characterised in that** the key (2) can be switched over into a cleared state, in which transmission of the coded operating signal (8, 9) is cleared only for a limited time period, up to a specific date, for a limited number of starting processes in the ignition lock (3) or the like, and **in that** on expiry of this time period, on reaching the date, expiry of the number of starting processes or the like, the key (2) switches over automatically into the activated state, wherein the programming of the data for the cleared state preferably takes place in the inactivated state.

9. Electronic key according to claim 8, **characterised in that** the actuating members (14, 15, 16) on the key (2) serve to input the data for the cleared state, for example **in that** to input the limited time period, the locking button (14) is used for the hours, the opening button (15) for the days and the boot button (16) for the month, and **in that** the key (2) preferably has a real time clock for determining the expiry of the limited time period, the date having been reached or the like.

10. Electronic key according to any one of claims 1 to 9, **characterised in that** an indicator, such as a display, at least a light-emitting diode or the like is arranged on the housing (17), for displaying the input of the individual code and/or for operator guidance in programming the key (2), for displaying the data for the cleared state, of other data stored in the key (2) or the like.

11. Electronic key according to any one of claims 1 to 10, **characterised in that** an indicator (30), such as a display on the steering wheel, located in the motor vehicle is used in the instrument cluster (29) on the dashboard or the like, for displaying the input of the individual code and/or for operator guidance in programming the key (2), for displaying the data for the cleared state, of other data stored in the key (2) or the like, wherein in particular the key (2) is introduced into the ignition lock (3) of the motor vehicle (30) to programme the individual code and/or to display the data stored in the key (2) for the cleared state or other data, **in that** actuating members (31) optionally associated with the indicator (30) are used for inputting during programming, and **in that** the charging state of a battery (33) being used for operation according to requirements of the key (2) or another energy source for checking purposes, as well as optionally the state of the key (2), can preferably be output and optionally monitored in the indicator (30).

12. Electronic key according to claim 11, **characterised in that** the real time clock in the key (2) is displayed via the display (30) on the instrument cluster (29) or the like and/or can be set, and **in that** the time of the clock (32) of the instrument cluster (29) is preferably transferred into the key (2) during the switching operation into the cleared state.

## Revendications

1. Clé électronique destinée à un système de fermeture (1), notamment un système de fermeture de portières et/ou de serrure de contact dans un véhicule automobile, comportant des moyens servant au fonctionnement adapté à la destination de la clé électronique (2), tels qu'un émetteur (22) et, le cas échéant, un récepteur (23), si bien que, dans un fonctionnement adapté à la destination, au moins un signal codé d'actionnement (8, 9) peut être transmis entre la clé électronique (2) et le système de fermeture (1), de telle sorte que, après une évaluation positive du signal d'actionnement (8, 9) transmis, des fonctions du système de fermeture (1) soient déclenchées, par exemple, dans le cas d'un véhicule automobile, l'autorisation d'accès par un verrouillage ou un déverrouillage des portières (4) de l'auto, le blocage automatique par libération de la serrure de contact (3) ou analogues, et dans lequel la clé (2) peut être programmée par l'utilisateur, avec un code individuel supplémentaire, notamment un code numérique ou un code vocal, pour effectuer le lancement de la transmission du signal codé d'actionnement (8, 9),
**caractérisée en ce que** la clé (2) présente un état actif, dans lequel la transmission du signal codé d'actionnement (8, 9) est bloquée de façon correspondante au fonctionnement adapté à la destination, ainsi qu'un état inactif, dans lequel la transmission du signal codé d'actionnement (8, 9) est autorisée de façon correspondante au fonctionnement adapté à la destination, **en ce que** la clé (2) peut être commutée entre l'état actif et l'état inactif, **en ce qu'**un passage de l'état actif à l'état inactif est effectué simplement après l'entrée supplémentaire du code individuel au niveau de la clé (2), et **en ce que**, lors du passage de l'état actif à l'état inactif, on peut procéder à la programmation du code individuel ou à la réactivation d'un code individuel déjà programmé.

2. Clé électronique selon la revendication 1,
**caractérisée en ce que** les moyens servant au fonctionnement adapté à la destination sont disposés dans un boîtier (17) de la clé (2), **en ce que** des organes d'actionnement (14, 15, 16), prévus pour le déclenchement de la transmission du signal codé d'actionnement (8), sont situés au niveau du boîtier (17), et **en ce que** les organes d'actionnement (14, 15, 16) sont, de préférence, des touches, notamment trois touches, à savoir une touche de fermeture (14) pour le verrouillage des portières (4) de l'auto, une touche d'ouverture (15) pour le déverrouillage des portières (4) de l'auto, ainsi qu'une touche de coffre à bagages (16) servant à l'ouverture du couvercle du coffre à bagages.

3. Clé électronique selon la revendication 1 ou 2,
**caractérisée en ce que** l'entrée du code individuel est effectuée à l'aide des organes d'actionnement (14, 15, 16) situés au niveau du boîtier (17), **en ce que**, de préférence, dans le cas d'un code individuel consistant en un code numérique, des positions de chiffres correspondants du code numérique sont associées aux organes d'actionnement (14, 15, 16), le nombre des actionnements de l'organe d'actionnement (14, 15, 16) associé ayant pour effet de coder le chiffre correspondant et **en ce que**, en outre et de préférence, un temps de retard est prévu pour la déconnexion des organes d'actionnement (14, 15, 16) pour l'entrée du code individuel après le déclenchement de l'instruction de commutation, l'écoulement du temps de retard étant indiqué par un moyen lumineux (20) ou analogue, au niveau du boîtier (17).

4. Clé électronique selon la revendication 1, 2 ou 3,
**caractérisée en ce qu'**un organe d'actionnement (19) supplémentaire, notamment une touche, est disposé au niveau du boîtier (17) pour le déclenchement de la commutation entre l'état actif et l'état inactif.

5. Clé électronique selon la revendication 1, 2 ou 3,
**caractérisée en ce que** la commutation entre l'état actif et l'état inactif peut être déclenchée à l'aide d'un organe d'actionnement (14, 15, 16) et, de préférence, la touche de fermeture (14) étant utilisée pour le passage à l'état actif, tandis que la touche de fermeture (15) est utilisée pour le passage à l'état inactif, ou **en ce que** la commutation peut être déclenchée par un actionnement simultané de deux organes d'actionnement (14, 15, 16).

6. Clé électronique selon l'une des revendications 1 à 5,
**caractérisée en ce que** la réactivation d'un code individuel déjà programmé, lors de la commutation de l'état inactif à l'état actif, peut être effectuée en actionnant plusieurs fois de façon interrompue un organe d'actionnement (14, 15, 16), notamment en exerçant trois fois une pression interrompue sur la touche de fermeture (14), ou pendant que le véhicule automobile roule, par un actionnement plus long d'un organe d'actionnement (14, 15, 16) quelconque, et **en ce que**, de préférence, l'état actif est établi de manière permanente avec blocage du signal codé de fonctionnement (8, 9) à la manière d'un dispositif de protection pour les jeux, si un code individuel faux est entré plusieurs fois, la remise à l'état inactif n'étant alors possible qu'à l'aide d'un code spécial, par exemple à l'atelier.

7. Clé électronique selon l'une des revendications 1 à 6,
**caractérisée en ce qu'**il est prévu une indication pour l'état actif et/ou pour l'état inactif et/ou pour le passage à l'état actif ou bien à l'état inactif de la clé (2), l'indication pouvant être fournie, par exemple, par un clignotement rapide pendant une durée déterminée, d'un moyen lumineux (20) situé au niveau du boîtier (17), notamment du voyant lumineux de vérification de la pile, ou par l'intermédiaire d'une diode luminescente située au niveau du boîtier (17), avec une lumière rouge à l'état actif et une lumière verte à l'état inactif.

8. Clé électronique selon l'une des revendications 1 à 7,
**caractérisée en ce que** la clé (2) peut être commutée pour prendre un état déconnecté, dans lequel la transmission du signal codé de fonctionnement (8, 9) est possible uniquement pendant un laps de temps limité, jusqu'à une date déterminée, pour un nombre limité d'opérations de démarrage dans la serrure de contact (3) ou analogue et **en ce que**, après l'écoulement du laps de temps, lorsque la date est atteinte, lorsque le nombre d'opérations de démarrage est épuisé, ou analogues, la clé (2) passe alors automatiquement à l'état actif, tandis que, de préférence, la programmation des données pour l'état déconnecté s'effectue à l'état inactif.

9. Clé électronique selon la revendication 8,
**caractérisée en ce que** les organes d'actionnement (14, 15, 16), situés sur la clé (2), servent à l'entrée des données pour l'état déconnecté, par exemple **en ce que** pour l'entrée du laps de temps limité, on utilise la touche de fermeture (14) pour les heures, la touche d'ouverture (15) pour les jours et la touche de coffre (16) pour les mois et **en ce que**, de préférence, la clé (2) comporte une horloge en temps réel pour la détermination de l'écoulement du laps de temps limité, l'arrivée à la date déterminée ou analogues.

10. Clé électronique selon l'une des revendications 1 à 9,
**caractérisée en ce qu'**il est prévu, au niveau du boîtier (17) un dispositif indicateur, tel qu'un afficheur, au moins une diode luminescente ou analogue pour la visualisation de l'entrée du code individuel et/ou pour le guidage de l'utilisateur lors de la programmation de la clé (2), pour la visualisation des données pour l'état déconnecté, pour celle d'autres données mémorisées dans la clé (2), ou analogues.

11. Clé électronique selon l'une des revendications 1 à 10,
**caractérisée en ce qu'**un dispositif indicateur (30) situé dans le véhicule automobile, par exemple un afficheur placé au niveau du volant, dans l'instrument combiné (29) sur le tableau de bord ou analogues, est utilisé pour la visualisation de l'entrée du code individuel et/ou pour le guidage de l'utilisateur lors de la programmation de la clé (2), pour la visualisation des données pour l'état déconnecté, pour celle d'autres données mémorisées dans la clé (2), ou analogues, la clé (2) étant alors introduite dans la serrure de contact (3) du véhicule automobile, notamment pour la programmation du code individuel et/ou pour la visualisation des données mémorisées dans la clé (2) pour l'état déconnecté,
ou bien d'autres données, **en ce que**, le cas échéant, des organes d'actionnement (31) associés au dispositif indicateur (30) sont utilisés pour l'entrée lors de la programmation et **en ce que**, de préférence, l'état de charge d'une pile (33) servant au fonctionnement adapté à la destination de la clé (2), ou d'une autre source d'énergie, pour le contrôle ainsi que le cas échéant l'état dans lequel se trouve la clé (2), peuvent être fournis au dispositif indicateur (30) ainsi que surveillés, le cas échéant.

12. Clé électronique selon la revendication 11,
**caractérisée en ce que** l'horloge en temps réel, située dans la clé (2), peut être visualisée et/ou réglée par l'intermédiaire de l'afficheur (30) au niveau de l'instrument combiné (29) ou analogue et **en ce que**, de préférence, une prise en charge du temps d'horloge de l'horloge (32) de l'instrument combiné (29) est transférée à la clé (2) lors du passage à l'état déconnecté.
